(19)

Europäisches
Patentamt
European
Patent Office
Office européen
des brevets

(11) **EP 4 431 196 A1**

(12) **EUROPEAN PATENT APPLICATION**
published in accordance with Art. 153(4) EPC

(43) Date of publication:
**18.09.2024 Bulletin 2024/38**

(21) Application number: **22883266.3**

(22) Date of filing: **15.09.2022**

(51) International Patent Classification (IPC):
*B09B 3/70* (2022.01)      *B01F 27/95* (2022.01)
*B01J 19/18* (2006.01)      *B09B 3/38* (2022.01)

(52) Cooperative Patent Classification (CPC):
**B01F 27/091; B01F 23/30; B01F 27/82;**
**B01F 27/95; B01F 35/92; B09B 3/38;**
B01F 2035/98; B09B 2101/30

(86) International application number:
**PCT/JP2022/034528**

(87) International publication number:
**WO 2023/067956 (27.04.2023 Gazette 2023/17)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.10.2021 JP 2021173299**

(71) Applicant: **O.C.O. Technology Ltd**
**Kent ME4 4QU (GB)**

(72) Inventors:
• **MINAKAWA, Koji**
**Kobe-shi, Hyogo 651-0072 (JP)**

• **NAKAHARA, Shintaro**
**Kobe-shi, Hyogo 651-0072 (JP)**
• **MAEDA, Yuki**
**Kobe-shi, Hyogo 651-0072 (JP)**
• **FUJIWARA, Hiroshi**
**Kobe-shi, Hyogo 651-0072 (JP)**
• **BISSETT, Tom**
**Chatham, Kent ME4 4QU (GB)**
• **GUNNING, Peter**
**Chatham, Kent ME4 4QU (GB)**

(74) Representative: **HGF**
**HGF Limited**
**1 City Walk**
**Leeds LS11 9DX (GB)**

(54) **CARBONATION TREATMENT DEVICE AND CARBONATION TREATMENT METHOD**

(57) Provided in the present invention is an apparatus and method for carbonation treatment capable of efficiently carrying out a carbonation treatment. Provided is a carbonation treatment apparatus for subjecting a solid matter contained in a treatment object to a carbonation treatment by bringing the treatment object into contact with carbon dioxide while stirring the treatment object. The apparatus includes: a reaction vessel having a housing space in which the treatment object is housed; at least one stirrer that rotates about a vertically extending axis to stir the treatment object housed in the housing space; and the at least one stirrer being configured to move in planetary motion in the housing space when the treatment object is stirred.

Figure 2

**EP 4 431 196 A1**

## Description

FIELD

The present invention relates to a carbonation treatment apparatus and a carbonation treatment method.

BACKGROUND

Conventionally, fly ash discharge from a waste incinerating facility is sometimes subjected to a carbonation treatment for the purpose of lowering the pH or preventing elution of heavy metals. A known apparatus for such a carbonation treatment is disclosed in Patent Literature 1 below, which includes a reaction vessel having a cylindrical body with both ends closed, and disposed to have a center axis of the cylindrical body extending in a horizontal direction, and a stirrer having a rotational shaft disposed along the center axis of the reaction vessel.

The carbonation treatment in the apparatus of this type includes circulating a gas containing carbon dioxide within the apparatus while stirring a treatment object in the form of paste or slurry containing fly ash and water, thereby transforming calcium oxide, calcium hydroxide or the like to calcium carbonate.

CITATION LIST

Patent Literature

Patent Literature 1: JP 2002-224640 A

SUMMARY

Technical Problem

When a stirrer having a configuration in which a stirring impeller is mounted to a rotational shaft passing through the center of the horizontal cylindrical reaction vessel as described in Patent Literature mentioned above is used, the rotational shaft can be dimensioned to have a length approximating the entire length of the reaction vessel, and stirring impellers can be disposed at plural places along such a longitudinal axis. This configuration can suppress occurrence of a site in the apparatus where the treatment object is barely stirred, and hence enables carbon dioxide to be easily distributed over the entire treatment object.

However, the stirring impellers of the apparatus of this type, which vertically rotate, are likely to jump up the treatment object. Fly ash and water are relatively homogeneously mixed together in the treatment object in a downstream stage of the carbonation treatment, but the fly ash sometimes agglomerates in a pre-treatment stage. Thus, using the stirrer including the vertically rotating stirring impellers may cause ash to easily fly upward inside the apparatus. The ash thus flew may be entrained with a gas to be discharged from the apparatus and hence discharged to the outside the apparatus. In a situation where fly ash intrudes into a gas discharge system, cleaning must be frequently performed, which hinders efficient operation.

In order to prevent the above problem, it is conceivable that a stirrer with a stirring impeller mounted to a vertically extending rotational shaft is used, and the carbonation treatment is carried out by the horizontal rotation of the stirring impeller. However, sufficient stirring is barely carried out only by the horizontal rotation of the stirring impeller. Because of this, it is difficult to efficiently carry out the carbonation treatment by such a conventional method. Thus, it is an object of the present invention to provide a carbonation treatment apparatus and a carbonation treatment method that enable an efficient carbonation treatment.

Solution to Problem

The present inventors have made intensive studies to solve the above problem, found that, even with a stirring impeller rotating not vertically but horizontally, carbon dioxide can be easily distributed over the entire treatment object when the rotation of the stirring impeller is made in a specific manner and furthermore, a solid matter can be suppressed from being discharged from the reaction vessel, and hence accomplished the present invention.

In order to solve the above problem, the present invention provides a carbonation treatment apparatus for subjecting a solid matter contained in a treatment object to a carbonation treatment by bringing the treatment object into contact with carbon dioxide while stirring the treatment object, the apparatus including: a reaction vessel having a housing space in which the treatment object is housed; at least one stirrer that rotates about a vertically extending axis to stir the treatment object housed in the housing space; and the at least one stirrer configured to move in planetary motion in the housing space when the treatment object is stirred.

The present invention also provides a carbonation treatment method for subjecting a solid matter to a carbonation treatment by carbon dioxide using a carbonation treatment apparatus, the carbonation treatment apparatus including: a reaction vessel having a housing space in which a treatment object containing the solid matter is housed; at least one stirrer that rotates about a vertically extending axis to stir the treatment object housed in the housing space; and the at least one stirrer being configured to move in planetary motion in the housing space, the method including stirring the treatment object by the at least one stirrer, thereby carrying out the carbonation treatment.

Effect

According to the present invention, it is possible to provide a carbonation treatment apparatus and a carbonation treatment method that enable an efficient carbonation treatment.

BRIEF DESCRIPTION OF THE DRAWINGS

Fig. 1 is a schematic diagram showing a configuration of an apparatus in a certain incineration facility.
Fig. 2 is a schematic diagram showing one example of a carbonation treatment apparatus.
Fig. 3 is a partial enlarged view of showing the appearance of a stirrer of the carbonation treatment apparatus of Fig. 2.
Fig. 4 is a schematic diagram showing stirring areas of the carbonation treatment apparatus, specifically a cross sectional view taken along line IV-IV as viewed from the direction of arrow in Fig. 2.
Fig. 5A is a schematic diagram showing stirring areas of the carbonation treatment apparatus of Fig.2.
Fig. 5B is a schematic diagram showing stirring areas of the carbonation treatment apparatus of Fig.2.
Fig. 5C is a schematic diagram showing stirring areas of the carbonation treatment apparatus of Fig.2.

DESCRIPTION OF EMBODIMENTS

A description will be hereinafter made for a method for subjecting fly ash to a carbonation treatment using a carbonation treatment apparatus installed in an incineration facility according to one embodiment of the present invention. According to a carbonation treatment apparatus of this embodiment, fly ash is subjected to a carbonation treatment through contact of a treatment object containing fly ash and water with a gas containing carbon dioxide. Fly ash particles have a large specific area and therefore an efficient carbonation treatment can be carried out for fly ash itself, but fly ash is likely to agglomerate. Therefore, it is difficult to sufficiently stir fly ash by a conventional method. Further, fly ash is likely to be entrained with a gas, which has been used for the carbonation treatment, and discharged to the outside along with the gas. A treatment object subjected to the carbonation treatment of this embodiment may be any carbonatable material and is not limited to fly ash. A treatment object subjected to the carbonation treatment by the carbonation treatment apparatus of this embodiment is also not limited to particles.

In order to prevent the discharge of fly ash to the outside of the apparatus, a fine filter or the like may be installed. This may cause increase in the load of a blower or the like for supplying a gas containing carbon dioxide to the apparatus, which also may hinder an efficient carbonation treatment. According to this embodiment, even in the case where an object to be subjected to the carbonation treatment is fine particles such as fly ash, it is possible to carry out favorable stirring while preventing fly ash from flying upward. Therefore, this embodiment enables an efficient carbonation treatment. This kind of effect is not limited to the case where an object to be subjected to the carbonation treatment is fly ash. In the case where an object to be subjected to the carbonation treatment is a solid matter, the efficiency for the carbonation treatment can be increased by breaking the solid matter into small pieces and hence increasing the specific surface area of the solid matter. However, such small pieces of the solid matter are likely to be entrained with the gas to be discharged. Further, even in the case where the solid matter is in the form of large sized agglomerates, those agglomerates collide with each other into small fragments, which may be entrained with the gas to be discharged.

A treatment object subjected to the carbonation treatment by the carbonation treatment apparatus of this embodiment is a solid matter. The solid matter to be subjected to the carbonation treatment may be a product resulting from the heat treatment. Examples of the heat treatment include the treatment causing only the melting accompanied by no thermal decomposition, and the treatment causing the thermal decomposition. Examples of the thermal decomposition include those performed for the purpose of incineration, firing, gasification, or roasting. Examples of the object to be subjected to the thermal decomposition include municipal waste, biomass, paper making sludge, sewage sludge, cement raw materials, and iron raw materials. The solid matter to be subjected to the carbonation treatment may be a product derived from an object to be subjected to the thermal decomposition of these types. Examples of the product resulting from the thermal decomposition include incineration ash. Examples of the incineration ash include main ash and fly ash. The incineration ash to be subjected to the carbonation treatment may be in molten slag form. The product resulting from the thermal decomposition may be slag generated during the metal refining process.

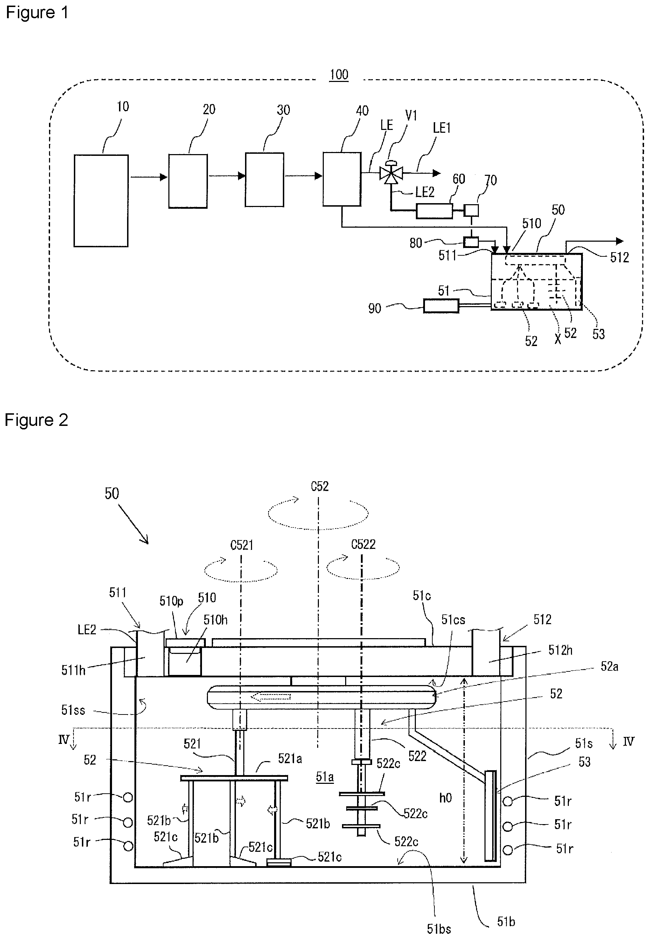

Fig. 1 shows a facility generating a carbonatable material in the form of an incineration facility 100 including an incinerator 10. The incinerator 10 incinerates an incineration object such as wastes, and discharges an exhaust gas of high temperature.

An exhaust gas discharged from the incinerator 10 contains fly ash as a solid matter in addition to a gas such as carbon dioxide, sulfur oxide, nitrogen oxide, or hydrogen chloride. The fly ash typically includes a component derived from an alkaline agent in addition to a component derived from an incineration object. The fly ash typically contains at least one chemical compound selected from the group consisting of potassium, calcium, and magnesium. Fly ash to be subjected to the carbonation treatment by the carbonation treatment apparatus and the carbonation treatment method in this embodiment may contain at least one chemical compound selected from the group consisting of, for example, sulfur, phosphorus, and silicon. The fly ash may include at least one selected from the group consisting of sodium, zinc, iron, aluminum, copper, and a compound thereof. The fly ash can also contain a heavy metal such as lead or hexavalent chromium, or a compound thereof.

Examples of the compound include oxides, hydroxides, carbides, carbonates, carbohydrates, nitrides, nitric substances, sulfides, sulfated substances, halides, and the like. A carbonation treatment apparatus 50 in this embodiment is used to suppress the heavy metal from eluting when the fly ash is subjected to the carbonation treatment and the fly ash after the carbonation treatment is buried in the ground or the like. In some examples, fly ash in which an elution amount of lead is 0.3 mg/L or more, is used for the carbonation treatment. In some examples, fly ash in which an elution amount of hexavalent chromium is 1.5 mg/L or more, is used for the carbonation treatment.

The carbonation treatment method can be carried out for any applications, and there is no limitation on the facility in which the method is used. For example, the method can be carried out in the incineration facility 100. The incineration facility 100 of this embodiment includes the incinerator 10, a temperature reduction tower 20 for cooling an exhaust gas discharged from the incinerator 10, an alkali treatment device 30 for adding an alkali agent such as slaked lime to the exhaust gas in order to neutralize an acidic gas contained in the exhaust gas that has been cooled in the temperature reduction tower 20, a fly ash removing device 40 equipped with a bag filter for removing fly ash as a solid content from the exhaust gas added with the alkali agent in the alkali treatment device 30, and a carbonation treatment apparatus 50 for subjecting the fly ash, which has been removed by the fly ash removing device 40, to a carbonation treatment. The carbonation treatment apparatus 50 of this embodiment is configured so that a clay-like treatment object X can be prepared by adding water to the housed fly ash, and as will be described later, the treatment object X can be subjected to the carbonization treatment while stirring the treatment object X.

The incineration facility 100 is configured to be able to use carbon dioxide contained in an exhaust gas, in which fly ash has been removed by the fly ash removing device 40 by making the fly ash pass therethrough, for the carbonation treatment in the carbonation treatment apparatus 50. More specifically, according to the configuration of the incineration facility 100 of this embodiment, an exhaust gas which has passed through the fly ash removing device 40 is partially or entirely brought into contact with water in a water contacting device 60 equipped with a scrubber to remove a readily soluble gas by the water contacting device 60, so that the exhaust gas with the readily soluble gas removed can be supplied to the carbonation treatment apparatus 50. A component such as hydrogen chloride, sulfur dioxide, or nitrogen dioxide, which can be more easily removed from an exhaust gas by the contact with water than carbon dioxide, can be removed in the water contacting device 60. In this embodiment, an exhaust gas is supplied to the carbonation treatment apparatus 50 as a gas containing carbon dioxide, but the gas is not limited to the exhaust gas and various gases can be used. For example, a carbon dioxide gas having ≥99 mass% purity, which is filled in a cylinder and commercially available, can be supplied to the carbonation treatment apparatus 50.

Carbon dioxide used for the carbonation treatment in the carbonation treatment apparatus 50 can be introduced into the carbonation treatment apparatus 50 in liquid form or solid form. A liquefied carbon dioxide or carbonated water may be used for the carbonation treatment. Dry ice may be used for the carbonation treatment. A liquid or solid (e.g., sodium hydrogen carbonate, sodium carbonate), from which carbon dioxide is generated by the thermal decomposition or the chemical reaction, can be used for the carbonation treatment. The carbonation treatment can be carried out by using a high purity carbon dioxide gas or dry ice even without utilizing the water contacting device 60, a later-described blower 70, a later-described moisture removing device 80, a later-described cooling device 90, or the like. The carbonation treatment can be carried out without utilizing these devices, even in the case where an exhaust gas is used.

In the incineration facility 100 of this embodiment, an exhaust gas line LE that is a passage for discharging the exhaust gas from the fly ash removing device 40 branches into an exhaust gas discharge line LE 1 for discharging the exhaust gas to the outside of the system, and an exhaust gas supply line LE2 for supplying the exhaust gas to the carbonation treatment apparatus 50. In the incineration facility 100 of this embodiment, a valve V1 is mounted at a branching point of the exhaust gas line LE to be able to switch the exhaust gas passage between the exhaust gas discharge line LE1 and the exhaust gas supply line LE2, and adjust the amount of the exhaust gas to be supplied to the carbonation treatment apparatus 50.

In the incineration facility 100 of this embodiment, the exhaust gas supply line LE2 includes the water contacting device 60 and the blower 70, and is configured to so that a back pressure can be applied to the exhaust gas supplied to the carbonation treatment apparatus 50. In the incineration facility 100 of this embodiment, the exhaust gas supply line LE2 includes the moisture removing device 80 such as a mist separator to be able to reduce moisture contained in the exhaust gas supplied to the carbonation treatment apparatus 50.

According to some examples of the present invention, the incineration facility 100 of this embodiment further includes the cooling device 90 for cooling an inner wall surface of the carbonation treatment apparatus 50 that is in contact with the treatment object X. The cooling device 90 is configured to be able to circulate a cooling liquid between itself and the carbonation treatment apparatus 50, cool the cooling liquid which has been heated in the carbonation treatment apparatus 50 to make it have a lowered temperature, and thereafter supply the cooling liquid again to the carbonation treatment apparatus 50.

The carbonation treatment apparatus 50 includes a reaction vessel 51 that has a housing space 51a for housing the treatment object containing the fly ash and water, at least one stirrer 52 that rotates about a vertically extending axis within the housing space 51a to stir the treatment object X housed in the housing space 51a, and a scraper 53 for scraping off the treatment object X adhering to an inner wall surface of the reaction vessel 51. In the carbonation treatment apparatus 50 of this embodiment, the stirrer 52 is configured to move in planetary motion in the housing space 51a when the treatment object X is stirred.

What is meant by the expression "the stirrer 52 is configured to move in planetary motion" is that the stirrer 52 has a rotational axis parallel to a vertically extending center axis, and is movable on the circular path around the center axis.

The reaction vessel 51 includes a material supply part 510, through which the fly ash and water can be introduced into the housing space 51a. The material supply part 510 includes a through-hole that extends through a wall of the reaction vessel 51 to provide communication between the housing space 51a (hereinafter also referred to as material supply hole 510h) and an outside space, and a cover 510p that opens and closes the through hole (i.e., material supply hole 510h).

The reaction vessel 51 includes a gas intake part 511 for taking a gas containing carbon dioxide (i.e., exhaust gas which has passed through the water contacting device 60) into the housing space 51a in order to subject the fly ash contained in the treatment object X to the carbonation treatment while stirring the treatment object X by the stirrer 52, and a gas outlet part 512 for discharging the gas which has been taken into the housing space 51a from the gas intake part 511 and used for the carbonization treatment from the housing space 51a. The gas outlet part 512 of this embodiment is configured to be able to discharge the gas of an upper end area of the housing space 51a.

In the case where a high purity carbon gas or dry ice is used for the carbonation treatment, a reaction vessel without the gas intake part 511 or the gas outlet part can be used.

The reaction vessel 51 of this embodiment has a low-profile, hollow cylindrical shape with a dimension of the horizontal direction larger than the dimension of the vertical direction. That is, the housing space 51a of the reaction vessel 51 has a cylindrical shape. The reaction vessel 51 has a circumferential side wall 51s having a cylindrical shape defining side of the housing space 51a, a bottom wall 51b having a circular plate shape defining bottom of the housing space 51a, and a ceiling wall 51c having a circular plate shape defining top of the housing space 51a.

In the reaction vessel 51, the material supply hole 510h is disposed to extend through the ceiling wall 51c. The gas intake part 511 has a through hole extending through the ceiling wall 51c (hereinafter also referred to as gas intake hole 511h) in the same manner as the material supply part 510. The gas outlet part 512 also has a through hole extending through the ceiling wall 51c (hereinafter also referred to as gas outlet hole 512h) in the same manner as the gas intake part 511. The gas outlet part 512 opens to an inner wall surface 51cs of the ceiling wall 51c so that the gas of an upper end area of the housing space 51a can be discharged therethrough. The gas intake hole 511h and the gas outlet hole 512h are disposed opposite to each other with respect to the center axis of the housing space 51a with a large distance from each other in the horizontal direction.

In the reaction vessel 51, the circumferential side wall 51s and the bottom wall 51b are formed integrally with each other, while being formed separately from the ceiling wall 51c. The ceiling wall 51c is detachably attached to the circumferential side wall 51s and can be fitted onto an upper end opening of the cylindrical shaped circumferential side wall 51s. The housing space 51a of the reaction vessel 51 is configured to be a closed space by the ceiling wall 51c and the circumferential side wall 51s mounted together with no clearance therebetween so that the housing space 51a can be made into a positive pressure state (i.e., pressurized state) or a negative pressure state (i.e., depressurized state) by adjusting the amount of a gas to be taken from the gas intake hole 511h or the amount of a gas to be discharged from the gas outlet hole 512h.

The circumferential side wall 51s is configured to allow at least a lower side of the inner wall surface 51ss to be cooled by a cooling liquid supplied from the cooling device 90, and has a flow passage 51r through which the cooling liquid is circulated. The reaction vessel 51 can be configured to be able to cool not only the inner wall surface 51ss of the circumferential side wall 51s, but also an inner wall surface 51bs of the bottom wall 51b.

In the illustrated embodiment, the carbonation treatment apparatus 50 includes a plurality of stirrers 52 to stir the treatment object X housed in the reaction vessel 51. The plurality of stirrers 52 include a first stirrer 521 and a second stirrer 522. In this embodiment, the second stirrer 522 can rotate faster than the first stirrer 521 according to the rotational speed per unit time (rpm). In this embodiment, since the second stirrer 522 can rotate faster than the first stirrer 521, the movement of the treatment object X at the time of stirring is likely to be disturbed, and therefore it is possible to instantly stir the treatment object X into a homogeneous state.

As the first stirrer 521, a stirrer having a maximum rotational speed of ≤500 rpm can be used, and as the second stirrer 521, a stirrer having a maximum rotational speed of ≤3000 rpm can be used. The first stirrer 521 can be driven to rotate at, for example, a speed of 25 rpm to 250 rpm for the carbonation treatment. The second stirrer 522 can be driven to rotate at, for example, 100 rpm to 1000 rpm for the carbonation treatment.

The first stirrer 521 and the second stirrer 522 of this embodiment extend or hang from the ceiling wall 51c. More specifically, the first stirrer 521 and the second stirrer 522 hang from the ceiling wall 51c via a plate shaped body 52a that is disposed below the ceiling wall 51c in parallel to the ceiling wall 51c and horizontally rotatable.

In this embodiment, the plate shaped body 52a has a disc shape smaller than the ceiling wall 51c, and is configured as a gearbox to control the rotation of the stirrers 52. The plate shaped body 52a can horizontally rotate about an axis (hereinafter also referred to as revolution axis C52) vertically extending through the center of the reaction vessel 51. The thus hanging first stirrer 521 and second stirrer 522 are located away from the aforementioned axis (i.e., revolution axis C52) in the horizontal direction in the plate shaped body 52a to be able to move in planetary motion about the revolution axis C52.

The first stirrer 521 is configured to be able to rotate about an axis (hereinafter also referred to as first rotation axis C521) which vertically extends through a mounting point at which the first stirrer 521 is mounted to the plate shaped body 52a, and thereby stir the treatment object X. Similarly, the second stirrer 522 is configured to be able to rotate about an axis (hereinafter also referred to as second rotation axis C522), which vertically extends through a mounting point at which the second stirrer 522 is mounted to the plate shaped body 52a, and thereby stir the treatment object X. That is, each of the first stirrer 521 and the second stirrer 522 is configured to be able to rotate about its axis while revolving (i.e., moving in planetary motion, and thereby stir the treatment object X.

The revolution axis C52, the first rotation axis C521, and the second rotation axis C522 may not extend along the perpendicular direction, but may extend at a slight angle (e.g., 10 degrees or less) to the perpendicular. It is to be noted however that the angle to the perpendicular is preferably 5 degrees or less. In this embodiment, the revolution axis C52, the first rotation axis C521, and the second rotation axis C522 extend in the perpendicular direction.

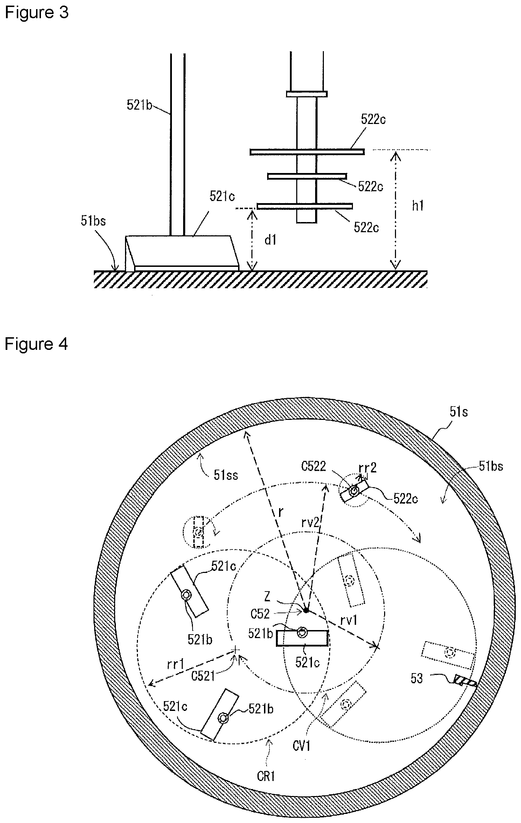

Each of the first stirrer 521 and the second stirrer 522 includes a stirring impeller that rotates about its rotation axis (i.e., first rotation axis C521 and second rotation axis C522) to stir the treatment object X. The stirring impeller of the first stirrer 521 (hereinafter also referred to as first stirring impeller 521c), and the stirring impeller of the second stirrer 522 (hereinafter also referred to as second stirring impeller 522c) are located different from each other in the perpendicular direction, as shown in Fig. 3. In this embodiment, since the second stirrer 522 rotates faster than the first stirrer 521 as described above, it is possible to instantly stir the treatment object X into a homogenized state. In addition, since the stirring impeller (i.e., second stirring impeller 522c) of the second stirrer 522 and the stirring impeller (i.e., first stirring impeller 521c) of the first stirrer 521 are located separately from each other in the perpendicular direction, it is possible to more instantly bring the treatment object X into a homogeneous state.

The first stirrer 521 includes a plurality of arms 521a that extend radially outwardly from the first rotation axis C521, a plurality of legs 521b that extend from the respective distal ends of the plurality of arms 521a, and the first stirring impellers 521c disposed respectively at lower ends of the legs 521b. More specifically, the first stirrer 521 includes the first stirring impellers 521c that move along the inner wall surface 51bs (upper surface) of the bottom wall 51b so as to be able to scoop up the treatment object X from the bottom of the reaction vessel 51 and stir the scooped-up treatment object X by the revolution about its revolution axis and the rotation about its rotation axis. Each of the first stirring impellers 521c is disposed from the lower end of the corresponding leg 521b in a direction opposite to the direction toward the rotation axis (i.e., first rotation axis C521) of the first stirrer 521 to form an inverted T-shape in conjunction with the corresponding leg 521b. This combined shape can be an L-shape.

The legs 521b of the first stirrer 521 are disposed at positions radially away from the first rotation axis C521 at which they vertically extend, and therefore the legs 521b circle around the first rotation axis C521. That is, the first stirrer 521 is configured so that the treatment object X can be stirred not only by the first stirring impellers 521c but also by the legs 521b.

As shown in Fig. 4, the first stirrer 521 is configured such that when a circle drawn as a trajectory of the first rotation axis C521 in the revolution is a revolution circle CV1, its radius is a revolution radius rv1, a circle that is an outermost trajectory among trajectories drawn by the first stirring impellers 521c in the rotation is a rotation circle CR1, and its radius is a rotation radius rr1, the rotation radius rr1 can be larger than the revolution circle rv1.

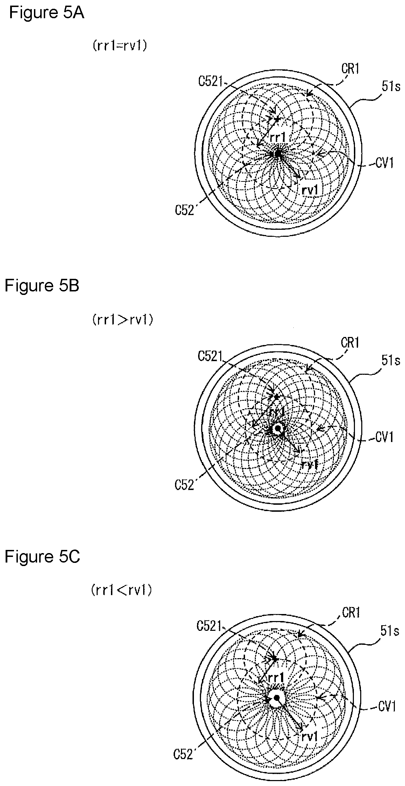

When the rotation radius rr1 of the first stirrer 521 is equal to the revolution radius rv1, the rotation circle CR1 circles around the revolution axis C52 so that one point of the revolution circle CR1 constantly contacts the revolution axis C52, as shown in Fig. 5A. When the rotation radius rr1 is larger than the revolution radius rv1, the revolution axis C52 constantly lies within the rotation circle CR1 while the rotation circle CR1 circles around the revolution axis C52, as shown in Fig. 5B. On the other hand, when the rotation radius rr1 is smaller than the revolution radius rv1, the rotation circle CR1 circles around the outer periphery of the revolution axis C52, so that the trajectory of the rotation circle CR1 has a donut-shape and therefore an area in which no stirring is performed is formed around the center of the reaction vessel 51. Accordingly, the rotation radius rr1 of the first stirrer 521 can be smaller than the revolution radius rv1, but is preferably equal to or larger than the revolution radius rv1.

The rotation radius rr1 and the revolution radius rv1 of the first stirrer 521 can satisfy any one of the following relationships (1) to (3):

$$(0.8 \times rv1) \leq rr1 \leq (1.2 \times rv1) \qquad (1)$$

$$(0.9 \times rv1) \leq rr1 \leq (1.2 \times rv1) \qquad (2)$$

$$rv1 \leq rr1 \leq (1.2 \times rv1) \qquad (3)$$

Each of the first stirrers 521 is preferably configured such that the first stirring impeller 521c is disposed to pass near the circumferential side wall 51s when the treatment object X is stirred. When the position of the revolution axis C52 is an original point Z, and a distance from the original point Z to the circumferential side wall 51s (radius of an outer circumference circle of the inner wall surface 51bs of the bottom wall 51b) is "r(m)" in a cross section of the reaction vessel 51 along a plane orthogonal to the revolution axis C52, the total length of the rotation radius rr1 and the revolution radius rv1 can be ≥0.8 r and <1.0 r, and can be ≥0.9 r and <1.0 r. Among them, the length of the rotation radius rr1 can be, for example, >_0.3 r and <0.7 r.

The second stirrer 522 includes the second stirring impeller 522c that rotates above the first stirring impeller 521c so as to be able to crush agglomerates contained in the treatment object X scooped up by the first stirrer 521. The second stirrer 522 of this embodiment includes the second stirring impeller 522c disposed above the upper ends of the first stirring impellers 521c. The second stirring impeller 522c can be a flat plate shaped impeller. The second stirring impeller 522c can be, for example, a flat plate shaped impeller disposed to have its plate face substantially parallel to the travelling direction during the rotation.

When the distance in the vertical direction from the inner wall surface 51bs of the bottom wall 51b to the inner wall surface 51cs of the ceiling wall 51c is (h0), the ratio the height (h1) of the upper edge of the second stirring impeller 522c from the inner wall surface 51bs of the bottom wall 51b to the height (h0) of the housing space 51a (h1/h0) can be ≤0.8. The ratio (h1/h0) can be ≤07, or can be ≤0.6. The ratio (h1/h0) can be, for example, ≥0.3. The ratio (h1/h0) can be ≥0.4.

The ratio of the distance (d1) from the lower edge of the second impeller 522c to the inner wall surface 51bs of the bottom wall 51b to the height (h0) of the housing space 51a (d1/h0) can be ≥0.1, or can be ≥0.2. The distance in the vertical direction from the lower edge of the second impeller 522c to the upper edge thereof can be, for example, ≥0.1h0 and ≥0.4h0.

The second stirrer 522 can include a plurality of second stirring impellers 522c. The plurality of second stirring impellers 522c can be mounted at different positions in the vertical direction. The number of the second stirring impellers 522c included in the second stirrer 522 can be, for example, two or more and six or less. The plurality of second stirring impellers 522c can be disposed at certain intervals in the vertical direction. One of the second stirring impellers 522c and a remaining one(s) of them can be disposed to cross each other to form an X-shape in plan view. The one of the second stirring impellers 522c and the remaining one(s) of the second stirring impellers 522c can cross each other at an angle of about 90° (e.g., 80° to 90°) in plan view.

When the plurality of second impeller 522c are disposed, the upper edge of the second stirring impeller 522c means an upper edge of the second stirring impeller 522c disposed at a highest position (i.e., highermost second impeller 522c). A distance (d1) from the lower edge of the second stirring impeller 522c to the inner wall surface 51bs of the bottom wall 51b means a distance from the lower edge of the second stirring impeller 522c disposed at a lowest position (i.e., lowermost second impeller 522c) to the inner wall surface 51bs.

The highermost second impeller 522c can be configured to rotate within a range of ≥0.3h0 and ≤0.6h0. The lowermost second impeller 522c can be configured to rotate within a range of ≥0.1h0 and <0.3h0.

Each of the second stirring impellers 522c has a rectangular shape as viewed in the axial direction of the second rotation axis C522. Each of the second stirring impellers 522c of this embodiment can have a parallelogram shape. The second stirring impeller 522c having a parallelogram shape can rotate about a cross point of the diagonal lines. It can be configured such that, among four corners of the second stirring impeller 522c, two corners located on the front side in the rotational direction each form an obtuse angle, while two corners located on the rear side in the rotational direction each form an acute angle.

The first stirring impellers 521c are mounted to the legs 521b disposed at positions away from the first rotation axis C521 in the radial direction in the first stirrer 521, while the second stirring impeller 522c is mounted to a rotational shaft extending along the second rotation axis C522 in the second stirrer 522. Accordingly, a rotation radius rr2 of the second stirrer 522 is equal to the length from the end edge in the radial direction of the second stirring impeller 522c to the second rotation axis C522. A revolution radius rv2 of the second stirrer 522 can be smaller or larger than a revolution radius rv1 of the first stirrer 521, and can be equal to the revolution radius rv1 of the first stirrer 521. The total length of the revolution radius rv2 and the rotation radius rr2, of the second stirrer 522 can be, for example, >_0.2 r and ≤0.8 r. Among them, the length of the rotation radius rr2 of the second stirrer 522 can be, for example, ≥0.1 r and ≤0.5 r.

The carbonation treatment apparatus 50 can be subjected to modification without limitation to the above illustrated embodiment. For example, the carbonation treatment apparatus 50 can include two first stirrers 521. In another example, the carbonation treatment apparatus 50 can include one first stirrer 521 and two second stirrers 522.

In the illustrated embodiment, the scraper 53 also hangs from the plate shaped body 52a. That is, the scraper 53 is disposed to move along the inner side of the circumferential side wall 51s during the planetary motion of the stirrer 52. The treatment object X is likely to adhere to the inner wall surface of the reaction vessel 51 when the treatment object X is subjected to the carbonation treatment. The reaction of the carbonation in the treatment object X adhering to the inner wall surface is less likely to progress than that in the treatment object X which is being stirred. In this embodiment, the treatment object X is prevented from adhering to the bottom wall 51b by the first stirring impeller 521c, and is prevented from adhering to the circumferential side wall 51s by the scraper 53.

In this embodiment, as described above, the scraper 53 scrapes off the treatment object X from the inner wall surface before it's tight adhesion, and therefore it is possible to prevent inhomogeneous stirring, as a result of which an unreacted material is less likely to is formed. It is preferable that such a function be exerted from the area close to the surface area of the treatment object X to the area close to the bottom of the reaction vessel 51. In order to crush a mass of the treatment object X, which has been scraped off by the scraper 53, by the second stirring impellers 522c, the positions of the upper end and the lower end of the scraper 53 can be set to correspond to the arrangement of the second stirring impellers 522c. The upper end of the scraper 53 can be positioned within a range of $\geq 0.3$ h0 and $\leq 0.6$ h0 above the inner wall surface 51bs of the bottom wall 51b, while the lower end of the scraper 53 can be positioned within a range of $< 0.3$ h0 above the inner wall surface 51bs of the bottom wall 51b. The scraper 53 can be disposed to have the lower end in contact with the inner wall surface 51bs of the bottom wall 51b.

According to the carbonation treatment method using the carbonation treatment apparatus 50, fly ash is subjected to the carbonization treatment using a gas containing carbon dioxide as described above.

In the carbonation treatment method of this embodiment, in addition to fly ash, water and a gas containing carbon dioxide, a heavy metal immobilizing agent can be used in combination. As the heavy metal immobilizing agent, a calcium compound such as calcium silicate, calcium hydroxide, calcium oxide, or calcium carbonate; a phosphoric acid compound such as calcium phosphate or hydroxyapatite; an inorganic immobilizing agent including an iron compound such as ferrous sulfate or ferrous chloride, or an organic (chelating) immobilizing agent including a dithiocarbamic acid-based compound can be used.

In the carbonation treatment method of this embodiment, a treatment object X that contains fly ash and water is prepared. In order to prepare the treatment object X, fly ash to be treated, water for use in the treatment, and a heavy metal immobilizing agent are respectively weighed. The weighing of fly ash can be performed before or after housing of the fly ash in the reaction vessel 51. That is, in this embodiment, previously weighed fly ash can be housed in the reaction vessel 51, or fly ash and the reaction vessel 51 can be weighed in total while adding fly ash to the reaction vessel 51.

The water can be purified water, industrial water or the like, and can be river water, lake water or the like. It is preferable that the treatment object X at the start time of the carbonation treatment contains water in an amount of 5 parts by mass or more based on 100 parts by mass of the solid content. By containing 5 parts by mass or more of water, fly ash is barely stirred up during the carbonation treatment, and fly ash can be suppressed from being discharged from the reaction vessel 51. The proportion of water can be 10 parts by mass or more, or 12 parts by mass or more. The amount of water to be maintained is preferably equal to or less than a certain value so that the viscosity of the treatment object X does not excessively increase. It is preferable that the treatment object X at the start time of the carbonation treatment contains water at a ratio of 30 parts by mass or less per 100 parts by mass of the solid content. The proportion of water can be 25 parts by mass or less, or can be 22 parts by mass or less. The proportion of water can be 20 parts by mass. For this reason, it is preferable that fly ash and water for use in the treatment be adjusted so that the proportion of water to be added to 100 parts by mass of fly ash can be in the range as described above (i.e., 10 parts by mass or more and 20 parts by mass or less)

The addition of water to fly ash is carried out, for example, in the reaction vessel 51. When water is added to fly ash, there is a possibility that the temperature of a contact point between water and fly ash becomes high due to the heat of hydration, and water partially evaporates. In this embodiment, since the reaction vessel 51 can be sealed, water that has been added to fly ash in the reaction vessel 51 and hence evaporated can be again absorbed into fly ash, so that a treatment object having an accurate amount ratio between fly ash and water can be prepared. The heavy metal immobilizing agent can be added along with water to fly ash, and can be added before adding water or after adding water.

When water is added, the treatment object X housed in the reaction vessel 51 through the inner wall surface can be cooled by driving the cooling device 90 to circulate a cooling liquid in a flow passage 51r. In this embodiment, the scraper 53 is provided to scrape off the treatment object X adhering to the circumferential side wall 51s by the revolution of the stirrer 52. Thus, the treatment object X, which has been cooled through the circumferential side wall 51s, can be instantly separated therefrom to allow the treatment object X to be sequentially cooled so that excellent cooling efficiency can be produced.

The first stirrer 521 of this embodiment is configured to scoop up the treatment object X adhering to the inner wall surface 51bs of the bottom wall 51b and stir the scooped-up treatment object X, and therefore provision of the fluid passage of the cooling liquid in the bottom wall 51b can produce higher cooling efficiency. That is, in this embodiment, high cooling efficiency can be produced by cooling the treatment object X by cooling either or both of the inner wall surface 51bs of the bottom wall 51b and the inner wall surface 51ss of the circumferential side wall 51s.

According to this embodiment, the treatment object X having an amount ratio between water and fly ash adjusted with accuracy can be thus prepared.

After the preparation of the treatment object X, the exhaust gas is circulated within the housing space 51a of the reaction vessel 51 to subject fly ash contained in the treatment object X to the carbonation treatment. At this time, it may be configured such that the exhaust gas is allowed to pass through a water contacting device 60 and the moisture removing device 80 and is introduced into the housing space 51a of the reaction vessel 51 through the gas intake part 511 of the carbonation treatment device 50. Therefore, the exhaust gas turns to be a gas containing carbon dioxide while containing low amounts of excessive water and a corrosive gas, and is supplied to the carbonation treatment device 50. Thus, in this embodiment, corrosion of a piping system and the carbonation treatment device 50 can be suppressed. In this embodiment, the possibility of, for example, hindrance to the carbonation treatment due to the presence of excessive water is reduced, and hence the possibility of large variation of the water ratio of the treatment object X can be reduced.

When an exhaust gas discharged from the incinerator 10 is supplied to the carbonation treatment device 50 while hydrogen chloride still remains in the exhaust gas, hydrogen chloride reacts with a calcium compound contained in fly ash, which poses a possibility of formation of a component elutable with water during the carbonation treatment. Therefore, it is preferable to remove hydrogen chloride by allowing even an exhaust gas, which contains hydrogen chloride in a low concentration, namely about 10 ppm, to pass through the water contacting device 60. That is, in the case where an exhaust gas containing ≥10 ppm of hydrogen chloride is used as a gas to be supplied to the carbonation treatment device 50, it is preferable to carry out removal of hydrogen chloride from the exhaust gas to reduce the concentration of hydrogen chloride to less than 10 ppm before supplying the exhaust gas to the carbonation treatment device 50. The concentration of hydrogen chloride of the gas to be supplied to the carbonation treatment device 50 is preferably 5 ppm or less, more preferably 1 ppm or less.

Since hydrogen chloride has high solubility to water as compared with carbon dioxide, a drafter for use in the water contacting device 60 can have a simple structure as long as it can allow an exhaust gas to pass through water that is quiet and still, and, for example, a submerged weir type drafter can be used.

A gas containing carbon dioxide can be circulated into the housing space 51a before or after the completion of addition of water to fly ash. That is, the carbonation treatment can be started either before or after addition of the total amount of water.

In the carbonation treatment, a gas in an upper end area of the housing space 51a is discharged by the gas outlet part 512, while a new gas is introduced into the housing space 51a from the gas intake part 511. Since the treatment object X is greatly stirred by the stirrer 52 in the housing space 51a, contact between fly ash and carbon dioxide can be made under the good conditions so that the carbonation treatment of fly ash can be smoothly progressed.

In the carbonation treatment, the first stirrer 521 can be rotated (about its axis) at a speed of 25 rpm to 250 rpm, while the second stirrer 522 can be rotated (about its axis) at a speed of 100 rpm to 1000 rpm. These stirrers 52 can be revolved (moved in a planetary motion) at a speed of 10 to 60 rpm when the carbonation treatment is carried out.

In this embodiment, an extra space in which the treatment object X is not housed can be provided on the upper side within the reaction vessel 51 to enable the treatment object X to be stirred in the extra space so that the treatment object X can be homogenized in a short period of time. In this embodiment, a gas is discharged from the upper end area of the housing space 51a. Thus, for example, even in the case where the treatment object X contains ash aggregates and ash flies upward by crushing of the aggregates within the reaction vessel 51, such fly ash is prevented from being discharged from the gas outlet part 512. In order to prevent ash from flying upward, all of the second stirring impellers 522c of the second stirrer 522 can be configured to stir the treatment object X while being placed within the treatment object X.

The extra space can be provided to occupy around 30% to 90%, or 50% to 70% of the volume of the reaction vessel 51. In other words, an average height (hx) of the treatment object X at the start time of the carbonation treatment can be ≥0.1 h0, or can be ≥0.3 h0. The average height (hx) can be ≤0.7 h0, or can be ≤0.5 h0. The average height (hx) of the treatment object X can be adjusted to have the following relationship with the height (h1) of the upper edge of the second stirring impeller 522c:

$$h1 \leq hx \leq 1.2\,h1$$

The average height (hx) of the treatment object X means a height on the assumption that the treatment object X is housed in the reaction vessel 51 to have a uniform height from the inner wall surface 51bs of the bottom wall 51b. For example, when the radius of the circumferential side wall 51s is constant in the vertical direction, the average height (hx) of the housing space 51a can be determined by dividing the volume of the treatment object X by the area of the inner wall surface 51bs of the bottom wall 51b.

In order to prevent discharge of fly ash from the gas outlet part 512, a flow velocity of the gas discharged from the gas outlet part 512 can be adjusted to achieve the required gas velocity, for example, adjusted to be ≥1 m/s and ≤5 m/s. The flow velocity can be adjusted to be ≤4 m/s, or can be adjusted to be ≤3 m/s. The flow velocity can be determined by the cross sectional area of a discharge hole (area of an opening facing the housing space: A $(m^2)$), and the amount of the gas discharged per unit time: V $(Nm^3/min)$. That is, the flow velocity can be determined by the following equation. Adjusting the flow velocity in this way makes it possible to suppress discharge of fly ash even when the amount of fly ash contained in a gas varies.

$$\text{Flow velocity (m/s)} = (\text{V}/60) / \text{A}$$

It is preferable that the gas to be introduced into the housing space 51a by the gas intake part 511 have a constant flow velocity or more for the purpose of promoting the carbonation treatment by generating a moderate gas flow. The flow velocity can be, for example, ≥10 m/s. The flow velocity can be ≥12 m/s. On the other hand, introduction of a gas into the housing space 51a at an excessive flow velocity causes ash or the like to easily fly upward inside the housing space 51a. In view of this, the flow velocity can be ≤40 m/s. The flow velocity can be ≤30 m/s, or can be ≤20 m/s. The flow velocity can be determined in the same manner as the flow velocity in the gas outlet part 512.

The flow velocity of a gas to be introduced into the housing space 51a or the flow velocity of a gas to be discharged from the housing space 51a can be adjusted according to the size of the gas intake hole or the gas outlet hole. In a case where a gas introduced through the gas intake hole is mostly absorbed in the treatment object, it is possible to eliminate the gas outlet hole. Further, in a case where a solid matter or the like from which carbon dioxide is generated by decomposition is introduced along with the treatment object into the housing space 51a in advance and then the carbonation treatment is carried out, it is also possible to eliminate the gas intake hole.

The flow velocities in discharging of the gas and supplying of the gas need not be maintained at the aforementioned flow velocities throughout the entire carbonation treatment time. For example, the aforementioned flow velocities can be applied in 80% or more, or 50% or more of the entire carbonation treatment time.

For circulating the gas in the housing space 51a, both sucking a gas from the gas outlet part 512, and blowing a gas flow from the gas intake part 511 are conceivable, while the latter method can be advantageous in that it can suppress discharge of fly ash or the like. Therefore, when the carbonation treatment is performed, the housing space 51a can be maintained at a positive pressure by blowing a gas flow from the gas intake part 511. The housing space 51a can be adjusted to exceed 0 kPa in terms of gauge pressure. The pressure of the housing space 51a can be ≥1 kPa. The pressure of the housing space 51a can be ≤10 kPa, or can be ≤5 kPa. The pressure of the housing space 51a can be ≤3 kPa.

In a case where an exhaust gas is used for the carbonation treatment, the concentration of carbon dioxide in a gas to be introduced into the housing space 51a is typically ≥5% to ≤30% by mass. In a case where a gas containing ≥90% by mass of carbon dioxide is used for the carbonation treatment, the gas introduced into the housing space 51a is mostly absorbed in the treatment object X. Therefore, in such a case where a gas containing a high concentration of carbon dioxide is used, the pressure of the housing space 51a can be set to be higher than the aforementioned pressures so as to accelerate the carbonation treatment.

In a case where a gas containing a high concentration of carbon dioxide is used, the pressure of the housing space 51a can be, for example, ≥3 kPa in terms of gauge pressure. The pressure of the housing space 51a can be ≥5 kPa, or ≥10 kPa. The pressure of the housing space 51a can be ≤30 kPa. The pressure of the housing space 51a can be ≤25 kPa, or can be ≤20 kPa. In order to keep the pressure of the housing space 51a at these levels, a reaction vessel having no gas discharge part can be used.

When the housing space 51a is maintained at a positive pressure, the aforementioned pressure needs not to maintained throughout the entire carbonization treatment time. For example, the aforementioned pressure can be applied in 50% or more, or 80% or more of the entire carbonation treatment time.

The aforementioned carbonation treatment can be carried out by time control. For the carbonation treatment, it can be configured such that the amount of carbon dioxide in a gas introduced into the housing space 51a and the amount of carbon dioxide discharged from the housing space 51a are measured to monitor the progress of the carbonation treatment and an end point of the carbonation treatment is determined by the monitoring.

In this embodiment, it is possible to efficiently carry out the carbonation treatment while suppressing discharge of fly ash to the outside the apparatus by carrying out the aforementioned carbonation treatment method using the aforementioned carbonation treatment apparatus. The foregoing is only a limiting example. In other words, the present invention is not limited to the above illustration in any way, and various changes can be made to the extent without significantly inhibiting the effect of the present invention.

EXAMPLES

Next, the present invention will be described in more detail with reference to examples without limitation thereto.

Preparation of a treatment object

About 300 kg of fly ash was placed in the carbonation treatment apparatus as shown in Fig. 2, and water was gradually added to the fly ash while stirring the fly ash to prepare a treatment object to be subjected to the carbonation treatment. A total of about 45 kg of water was added. Regarding the fly ash, the amount of eluted lead was about 4.0 mg/L and the amount of eluted hexavalent chromium was about 1.7 mg/L in the elution test according to Notification No. 13 from the Environment Agency.

Carbonation treatment

The carbonation treatment was carried out by circulating a simulated exhaust gas containing about 9% of carbon dioxide into the carbonation treatment device at a flow rate of about 600 to 1000 $m^3$/h while stirring the treatment object prepared in the manner described above. A flow rate at the time of discharge was 1.6 to 2.7 m/s, and an extra space was 50%. A visual observation of the inside of an outlet piping after the treatment for about 10 minutes was repeated 42 times under the above conditions was made, and it was confirmed that discharge of fly ash in the carbonation treatment could be sufficiently prevented. The difference between the amount of carbon dioxide introduced into the carbonation treatment apparatus and the amount of carbon dioxide discharged therefrom was monitored as the absorbing amount of carbon dioxide, and it was found that the absorbing amount of carbon dioxide based on 100 parts by mass of fly ash was about 0.7 mass parts when about 5 minutes elapsed after the start of the carbonation treatment, and at that time, the amount of eluted lead was about 0.02 mg/L and the amount of eluted hexavalent chromium was about 0.1 mg/L.

As described above, according to the carbonation treatment apparatus and the carbonation treatment method, the carbonation treatment could be efficiently performed.

REFERENCE SIGNS LIST

10: Incinerator
20: Temperature reduction tower
30: Alkali treatment device
40: Fly ash removing device
50: Carbonation treatment apparatus
51: Reaction vessel

51a: Housing space
51b: Bottom wall
51bs: Inner wall surface
51c: Ceiling wall
51cs: Inner wall surface
51r: Flow passage
51s: Circumferential wall surface
51ss: Circumferential wall surface
52: Stirrer
52a: Plate shaped body
53: Scraper
60: Water contacting device
70: Blower
80: Moisture removing device
90: Cooling device
100: Incineration facility
510: Material supply part
510h: Material supply hole
510p: Cover
511: Gas intake part
511h: Gas intake hole
512: Gas outlet part
512h: Gas outlet hole
521a: Arm
521b: Leg
521c: First stirring impeller
522c: Second Impeller
C52: Revolution axis
C521: First rotation axis
C522: Second rotation axis
CR1: Rotation circle
CV1: Revolution circle
LE: Exhaust gas line
LE1: Exhaust gas discharge line
LE2: Exhaust gas supply line
V1: Valve
X: Treatment object
Z: Original point
rr1: Rotation radius
rr2: Rotation radius
rv1: Revolution radius
rv2: Revolution radius

**Claims**

1. A carbonation treatment apparatus for subjecting a solid matter contained in a treatment object to a carbonation treatment by bringing the treatment object into contact with carbon dioxide while stirring the treatment object, the apparatus comprising:

   a reaction vessel having a housing space in which the treatment object is housed;
   at least one stirrer that rotates about a vertically extending axis to stir the treatment object housed in the housing space; and
   the at least one stirrer that moves in planetary motion in the housing space when the treatment object is stirred.

2. The carbonation treatment apparatus according to claim 1, wherein the reaction vessel includes a gas intake part for taking a gas containing the carbon dioxide into the housing space, and a gas outlet part for discharging the gas from the housing space; and the gas outlet part is configured to be able to discharge the gas of an upper end area of the housing space.

3. The carbonation treatment apparatus according to claim 1 or 2, further comprising a cooling device for cooling an inner wall surface of the reaction vessel that is in contact with the treatment object.

4. The carbonation treatment apparatus according to any one of claims 1 to 3, wherein

the at least one stirrer comprises a plurality of stirrers;
the plurality of stirrers comprise a first stirrer and a second stirrer; and
the second stirrer is configured to be able to rotate at a higher speed than the first stirrer.

5. The carbonation treatment apparatus according to claim 4, wherein

the housing space of the reaction vessel has a cylindrical shape;
the reaction vessel has a bottom wall defining bottom of the housing space, a circumferential side wall defining side of the housing space, and a ceiling wall defining top of the housing space;
the first stirrer includes a stirring impeller that moves along the bottom wall so as to be able to scoop up the treatment object from the bottom of the reaction vessel and stir the scooped-up treatment object when the first stirrer rotates; and
the second stirrer includes a stirring impeller that rotates above the stirring impeller of the first stirrer so as to be able to crush agglomerates contained in the treatment object which has been scooped up by the first stirrer.

6. The carbonation treatment apparatus according to any one of claims 1 to 4, wherein

the housing space of the reaction vessel has a cylindrical shape;
the reaction vessel has a bottom wall defining bottom of the housing space, a circumferential side wall defining side of the housing space, and a ceiling wall defining top of the housing space; and

the carbonation treatment apparatus further comprises a scraper that moves along the inner side of the circumferential side wall to scrape off the treatment object adhering to the inner wall surface of the circumferential side wall.

7. A carbonation treatment method for subjecting a solid matter to a carbonation treatment by carbon dioxide using a carbonation treatment apparatus,

the carbonation treatment apparatus comprising:

a reaction vessel having a housing space in which a treatment object containing the solid matter is housed;
at least one stirrer that rotates about a vertically extending axis to stir the treatment object housed in the housing space; and
the at least one stirrer being configured to move in planetary motion in the housing space,

the method comprising stirring the treatment object by the at least one stirrer, thereby carrying out the carbonation treatment.

8. The carbonation treatment method according to claim 7, wherein

the reaction vessel includes a gas intake part for taking a gas containing the carbon dioxide into the housing space, and a gas outlet part for discharging the gas from the housing space;
the gas outlet part is configured to be able to discharge the gas of an upper end area of the housing space, and
the method comprises carrying out the carbonation treatment while circulating the gas in the housing space with the treatment object housed therein.

9. The carbonation treatment method according to claim 7 or 8, wherein the treatment object contains $\geq 5$ to $\leq 25$ parts by mass of water per 100 parts by mass of the solid content.

10. The carbonation treatment method according to claim 8 or 9, wherein a flow velocity of the gas discharged from the housing space through the gas outlet part is adjusted to $\geq 1$ m/s to $\leq 4$ m/s in the carbonation treatment.

11. The carbonation treatment method according to any one of claims 8 to 10, wherein a flow velocity of the gas to be taken into the housing space through the gas intake part is adjusted to $\geq 10$ m/s to $\leq 40$ m/s in the carbonation treatment.

**12.** The carbonation treatment method according to any one of claims 8 to 11, wherein a pressure of the housing space is adjusted to have a positive pressure of ≤20 kPa in terms of gauge pressure.

Figure 1

Figure 2

Figure 3

Figure 4

Figure 5A

(rr1=rv1)

Figure 5B

(rr1>rv1)

Figure 5C

(rr1<rv1)

## INTERNATIONAL SEARCH REPORT

| | International application No. |
|---|---|
| | **PCT/JP2022/034528** |

**A. CLASSIFICATION OF SUBJECT MATTER**

$B09B\ 3/70$(2022.01)i; $B01F\ 27/95$(2022.01)i; $B01J\ 19/18$(2006.01)i; $B09B\ 3/38$(2022.01)i
FI: B09B3/70; B01F27/95; B01J19/18 ZAB; B09B3/38

According to International Patent Classification (IPC) or to both national classification and IPC

**B. FIELDS SEARCHED**

Minimum documentation searched (classification system followed by classification symbols)

B09B3/70; B01F27/95; B01J19/18; B09B3/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-267908 A (KURITA WATER IND. LTD.) 30 September 2004 (2004-09-30) claims, paragraphs [0014]-[0039], table 1, fig. 1 | 1-2, 7-9 |
| Y | | 3-6, 10-12 |
| Y | JP 11-218320 A (NIPPON STEEL CORP.) 10 August 1999 (1999-08-10) claims, fig. 1 | 3-6 |
| Y | JP 2004-130172 A (KOBE STEEL, LTD.) 30 April 2004 (2004-04-30) paragraphs [0024]-[0025], fig. 1 | 4-6 |
| Y | JP 2001-62426 A (KURITA WATER IND. LTD.) 13 March 2001 (2001-03-13) paragraphs [0019]-[0020] | 4-6 |
| Y | JP 2020-534999 A (GUANGDONG INST. OF ECO-ENVIRONMENTAL SCIENCE & TECHNOLOGY) 03 December 2020 (2020-12-03) paragraphs [0024], [0026], fig. 2-3 | 6 |
| Y | JP 2017-15354 A (NIPPON STEEL & SUMITOMO METAL CORP.) 19 January 2017 (2017-01-19) paragraphs [0024], [0029] | 10-12 |

✓ Further documents are listed in the continuation of Box C.　　✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 October 2022** | **25 October 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

International application No.

**PCT/JP2022/034528**

**C.    DOCUMENTS CONSIDERED TO BE RELEVANT**

| Category* | Citation of document, with indication, where appropriate, of the relevant passages | Relevant to claim No. |
|---|---|---|
| Y | JP 8-323329 A (KAWASAKI STEEL CORP.) 10 December 1996 (1996-12-10)<br>paragraph [0017] | 10-12 |
| Y | JP 2000-111023 A (CHUGAI RO CO., LTD.) 18 April 2000 (2000-04-18)<br>paragraph [0012] | 10-12 |

Form PCT/ISA/210 (second sheet) (January 2015)

## INTERNATIONAL SEARCH REPORT
### Information on patent family members

International application No.

**PCT/JP2022/034528**

| Patent document cited in search report | | | Publication date (day/month/year) | Patent family member(s) | Publication date (day/month/year) |
|---|---|---|---|---|---|
| JP | 2004-267908 | A | 30 September 2004 | (Family: none) | |
| JP | 11-218320 | A | 10 August 1999 | (Family: none) | |
| JP | 2004-130172 | A | 30 April 2004 | (Family: none) | |
| JP | 2001-62426 | A | 13 March 2001 | (Family: none) | |
| JP | 2020-534999 | A | 03 December 2020 | US 2021/0101193 A1 paragraphs [0045]-[0049], fig. 2-3 WO 2019/192241 A1 CN 108453122 A | |
| JP | 2017-15354 | A | 19 January 2017 | (Family: none) | |
| JP | 8-323329 | A | 10 December 1996 | (Family: none) | |
| JP | 2000-111023 | A | 18 April 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002224640 A